**Europäisches Patentamt**

**European Patent Office**

**Office européen des brevets**

(19)

(11) Veröffentlichungsnummer: **0 162 237**
**A1**

## (12)   EUROPÄISCHE PATENTANMELDUNG

(21) Anmeldenummer: **85103788.7**

(22) Anmeldetag: **29.03.85**

(51) Int. Cl.⁴: **G 01 P 5/00**

(30) Priorität: **30.03.84 DE 3411778**

(43) Veröffentlichungstag der Anmeldung:
**27.11.85 Patentblatt 85/48**

(84) Benannte Vertragsstaaten:
**BE CH FR GB IT LI NL SE**

(71) Anmelder: **BOPP & REUTHER GMBH**
**Carl-Reuther-Strasse 1**
**D-6800 Mannheim 31(DE)**

(72) Erfinder: **Becker, Wolf-Jürgen, Prof. Dr.**
**Im Schlittweg 20**
**D-6701 Fussgönheim(DE)**

(54) **Verfahren und Vorrichtung zum Messen der Strömungsgeschwindigkeit von Fluiden mittels Ultraschall.**

(57) Die Erfindung bezieht sich auf ein Verfahren und eine Vorrichtung zum Messen von Strömungsgeschwindigkeiten mit Hilfe von Ultraschallschwingungen, bei der eine erste und eine zweite aus je einem Sendeund je einem Empfangswandler (3,3',4,4') bestehende Ultraschall-Meßstrecker (2,2') angeordnet sind, bei der sich jeweils eine zur Strömungsrichtung parallel orientierte Ausbreitungskomponente der Ultraschall-Schwingungen in Strömungsrichtung bzw. gegen die Strömungsrichtung einstellt, bei der die jeweiligen Laufzeiten der ultraschall- Schwingungen vom Sende- zum Empfangswandler (3,4) durch Erzeugen der jeweiligen Sing-Around-Frequenzen gemessen (F(V),F(R)) werden und bei der aus der Differenz (df) der beiden Sing-Around-Frequenzen ein der mitteren Strömungsgeschwindigkeit des Fluids proportionales Signal abgeleitet wird. Die Erfindung ist dadurch gekennzeichnet, daß die Ultraschall-Schwingungen über die beiden Ultraschall- Meßstrecken (2,2') dauernd als Trägersignal übertragen werden und daß für jede Ultraschall-Meßstreck (2,2') jeweils ein Oszillator aus einem Verstärker (8) und einem Mitkopplungsnetzwerk - letzteres bestehend aus Modulator, (6) Ultraschall-Meßstrecke (2) und Demodulator (7) - gebildet wird.

In einer weiteren Ausgestaltung der Erfindung durchlaufen die Ultraschall-Schwingungen eine einzige Ultraschall-Meßstrecke (2) alternierend in Vorwärts- und in Rückwärtsrichtung.

Figur 1a

Verfahren und Vorrichtung zum Messen
der Strömungsgeschwindigeit von
Fluiden mittels Ultraschall

Die Erfindung betrifft ein Verfahren zum Messen der Strömungsgeschwindigkeit von Fluiden mittels Ultraschall gemäß dem Oberbegriff des
Anspruchs 1. Sie betrifft ferner eine Vorrichtung zur Durchführung des
Verfahrens.

Zum Messen der Strömungsgeschwindigkeit von Fluiden mit Hilfe von Ultraschall-Schwingungen sind grundsätzlich zwei Verfahren bekannt, und zwar
die Laufzeitdifferenzmessung mit der Phasendifferenzmessung als Spezialfall und die direkte Laufzeitmessung mit dem Impuls-Folgefrequenz- bzw.
Sing-Around-Verfahren als Spezialfall.

Die Verfahren nach der Laufzeitdifferenzmessung erfordern zwar einen relativ geringen Aufwand an elektronischen Mitteln, sie haben jedoch den
Nachteil, daß die Schallgeschwindigkeit im zu messenden Fluid das Meßergebnis erheblich beeinflußt. Bei Verfahren nach der direkten Laufzeitmessung kann die Auswertung so erfolgen, daß das Meßergebnis von der
Schallgeschwindigkeit unabhängig ist. Es ist jedoch ein hoher Aufwand
in der Messung der Laufzeiten bzw. Impulsfolgefrequenzen erforderlich.
Die verschiedenen Verfahren zur Messung der Strömungsgeschwindigkeit
eines Fluides mit Ultraschall-Schwingungen wurden z.B. von F.L.Brand
im VDI-Bericht-Nr. 254, VDI-Verlag, Düsseldorf, 1976, auf den Seiten
107 bis 123 ausführlich erläutert.

Bei dem bekannten Impulsfolgefrequenz- bzw. Sing-Around-Verfahren werden pulsförmige Ultraschall-Schwingungsbündel von einem Geber zu einem Empfänger
übertragen. Der Empfänger meldet durch ein elektrisches Signal den Empfang des Ultraschallimpulses wieder zum Geber, indem wiederum ein neues
Ultraschall-Schwingungsbündel am Geber ausgelöst wird usw. Der zeitliche Abstand dieser Impulsfolgen ist ohne Berücksichtigung der Laufzeiten in der elektronischen Schaltung gleich der Laufzeit des Ultraschall-Schwingungsbündels durch das Fluid. Die Impulsfolgefrequenz ist hierbei umgekehrt proportional zur Laufzeit eines Ultraschall-Schwingungsbündels. Zur Vereinfachung der Auswertung und Erhöhung der Genauigkeit sendet man eine Impulsfolge von Ultraschall-Schwingungsbündeln abwechselnd mit der Strömungsgeschwindigkeit des Fluids, d.h. in Vorwärtsrichtung, und gegen die Strömungsrichtung des Fluids, d.h. in Rückwärtsrichtung. Dabei stellen sich abhängig von der Richtung und dem Betrag der Strömungsgeschwindigkeit unterschiedliche Folgefrequenzen ein. Bildet man die Differenz aus der Folgefrequenz in Vorwärtsrichtung und der Folgefrequenz in Rückwärtsrichtung, so ist diese Differenz direkt proportional der Strömungsgeschwindigkeit des Fluids. Der Vorteil dieses an sich bekannten Verfahrens ist die Eliminierung des Einflußes der Schallgeschwindigkeit im Fluid auf das Meßverfahren.

Bei diesem bekannten Impuls-Echo-Verfahren ist es nachteilig, daß der Triggerpunkt, an dem der Geber erneut eingeschaltet werden soll, nicht genügend genau reproduzierbar ist, so daß eine Ungenauigkeit allein schon durch diese Tatsache gegeben ist. Beim Senden, Übertragen und Empfangen der endlichen akustischen Schwingungsbündel sind im Geber, Fluid und Empfänger maßgeblich physikalische Einschwingvorgänge beteiligt. Die Hüllkurve eines empfangenen Schwingungsbündels ist eine Glockenkurve. Die Amplitude und damit die Intensität steigt allmählich von Null aus, d.h. aus dem Rauschen, über mehrere Schwingungen bis zu einem Maximum an. Weiterhin können Dichteunterschiede und Schwebeteilchen im Fluid, beispielsweise Luftblasen und feste Partikel den Ultraschallstrahl derart streuen oder absorbieren, daß der Empfangsimpuls verschliffen wird, oder der Empfangswandler überhaupt kein Signal mehr empfängt.

Beim Impuls-Echo-Verfahren ist der Triggerpunkt nur dann genügend reproduzierbar, wenn er so gelegt wird,

- daß er immer über dem thermischen Rauschen der Ultraschallwandler und der elektronischen Mittel liegt,

- daß er immer über möglichen akustischen und elektromagnetischen Strörungen liegt und

- daß er in einem möglichst steilen Teil der Schwingungsamplitude liegt.

Trotz erheblicher elektronischer Maßnahmen, wie Unterdrückung offensichtlich falscher Meßwerte, lassen sich diese Forderungen wegen der verschliffenen Ultraschall-Schwingungsbündel nur unzureichend bzw. nur mit erheblichem elektronischen Aufwand befriedigend erfüllen. Der große Nachteil der Störanfälligkeit infolge eines Ausfalls des Empfangssignals durch Gasbläschen und feste Partikel im Fluid ist jedoch prinzipiell nicht zu beseitigen.

Der vorliegenden Erfindung liegt die Aufgabe zugrunde, ein Verfahren und eine Vorrichtung zum Messen der Strömungsgeschwindigkeiten eines homogenen und inhomogenen Fluids mit Hilfe von Ultraschall-Schwingungen der eingangs genannten Art anzugeben, bei dem die Schallgeschwindigkeit im Fluid nicht in das Meßergebnis eingeht, die Triggerung nicht von den physikalischen Eigenschaften des Fluids und der Sende- und Empfangswandler abhängt, kurzzeitige Dichtestörungen des Fluids selbsttätig ausgemittelt werden und sich eine von der Amplitude des Empfangssignals unabhängige Sing-Around-bzw. Folgefrequenz ergibt.

Diese Aufgabe wird durch die kennzeichnenden Merkmale des Anspruchs 1 gelöst.

Der vorliegenden Erfindung liegt die Erkenntnis zugrunde, daß man die Vorteile des Impuls-Folgefrequenz-Verfahrens beibehalten kann, ohne gleichzeitig deren Nachteile übernehmen zu müssen, wenn man das Ultraschallsignal dauernd überträgt und dieses Dauersignal mit der Sing-Around- bzw. Folgefrequenz moduliert.

Bei einem dauernden Aussenden von Ultraschall-Schwingungen durch das Fluid entfällt die Notwendigkeit zu einer Triggerung, da keine Schwingungsbündel gesendet werden. Eine Dichteschwankung des Fluids durch Gasblasen oder feste Partikel führt für die Zeit des Vorbeiströmens einer Dichteschwankung, d.h. für die Zeitdauer einer Unterbrechung der Übertragung der Ultraschall-Schwingungen durch das Fluid, zu einem Ausfall der Messung; danach werden sofort wieder korrekte Messungen gebildet. Das Impuls-Folgefrequenz- bzw. Impuls-Echo-Verfahren liefert prinzipiell bei einer falschen Triggerung durch kurzzeitiges Unterbrechen des Ultraschall-Schwingungsbündels Meßfehler in der Größenordnung der Messung, d.h. die Messung kann um einige hundert Prozent zu groß oder zu klein sein. Dies ist prinzipiell bei einem Dauerton-Verfahren nicht der Fall.

Die genannte Aufgabe wird mit einem Dauerton-Verfahren gelöst, wobei dauernd gesendete Ultraschall-Schwingungen einer einzigen Frequenz den akustischen Teil des Mitkopplungszweiges eines Oszillators bilden, der selbst auf der Sing-Around-Frequenz oder einem Vielfachen der Sing-Around-Frequenz schwingt. Ein elektronischer Oszillator besteht prinzipiell aus einem Verstärker mit der komplexen Verstärkung V und einem Mitkopplungsnetzwerk mit dem komplexen Kopplungsfaktor K. Dieses Mitkopplungsnetzwerk führt einen Teil der Energie vom Ausgang des Verstärkers auf seinen Eingang zurück. Eine solche Anordnung ist dann schwingfähig, wenn die allgemeine Schwingbedingung V x K = 1 erfüllt ist. Mit anderen Worten, die Verstärkung V muß gleich dem Kehrwert des Kopplungsfaktors K sein, d.h. der Verstärker muß die Energieverluste des Kopplungsnetzwerkes gerade ausgleichen. Die Frequenz, mit der ein solcher Oszillator schwingt, d.h. die Resonanzfrequenz des Oszillators, ist von den Eigenschaften des Mitkopplungsnetzwerkes abhängig, d.h. es werden nur solche Frequenzen zu Schwingungen angeregt, für die die allgemeine Schwingbedingung erfüllt ist. Die Periodendauer der Grundschwingung eines solchen Oszillators, d.h. die niedrigste Resonanzschwingung, ist gleich der Laufzeit eines Signals durch die Schleife, bestehend aus Verstärker und Mitkopplungsnetzwerk.

Im allgemeinen kann angenommen werden, daß die elektronischen Laufzeiten durch Verstärker und weitere elektronische Mittel wesentlich kleiner sind als die Laufzeit eines akustischen Signals durch ein Fluid, so daß die Resonanzfrequenz im wesentlichen durch die Laufzeit eines akustischen Signals durch das Fluid bestimmt ist. Die Resonanzfrequenz dieses Oszillators mit einem akustischen Mitkopplungsweg ist somit genau gleich der Sing-Around-Frequenz, die durch die Laufzeit eines akustischen Signals durch das Fluid gegeben ist.

Bei einer geeigneten Vorrichtung für ein solches Dauerton-Sing-Around-Frequenz Verfahren besteht die akustische Meßstrecke aus einem elektroakustischen Geber und einem elektroakustischen Empfänger, die mit einem definierten Abstand einander gegenüberstehen. Die Laufzeit des akustischen Signals ergibt sich aus der Division des Abstandes L der beiden elektroakustischen Wandler durch die effektive Schallgeschwindigkeit im Fluid. Infolge des Mitführungseffektes des akustischen Signals im Fluid durch die Strömung ergibt sich die effektive Schallgeschwindigkeit nach dem Additionstheorem der Geschwindigkeiten aus der Summe der Schallgeschwindigkeit im ruhenden Fluid und der in Schallausbreitungsrichtung wirksamen Komponente der Strömungsgeschwindigkeit des Fluids. Bei praktischen Ausführungsbeispielen mit Wasser als Fluid und Wandlerabständen von einigen Zentimetern bis zu einigen Metern liegen die Sing-Around-Frequenzen zwischen etwa 200 Kilohertz und etwa einem Kilohertz. In diesen Frequenzbereichen besitzen die elektroakustischen Wandler relativ große Abmessungen und ungeeignete akustische Eigenschaften, die für eine praktische Anwendung nicht brauchbar sind. Weiterhin ist ein Meßverfahren in diesem Frequenzbereich wegen möglicher akustischer Einflüsse von außen sehr störanfällig. Aus diesem Grunde werden in dieser Erfindung zur akustischen Übertragung Ultraschall-Schwingungen wesentlich höherer Frequenzen als Träger verwendet. Für Frequenzen über etwa 200 Kilohertz bis zu einigen Megahertz stehen piezoelektrische Ultraschallwandler in brauchbaren Abmessungen und mit geeigneten elektroakustischen Eigenschaften zur Verfügung.

Die hochfrequenten Trägerschwingungen werden vor dem Senden durch ein beliebiges analoges oder digitales Modulationsverfahren mit der Sing-Around-Frequenz moduliert. Nach dem Empfangen werden die hochfrequenten Trägerschwingungen demoduliert. Das demodulierte Sing-Around-Frequenz-Signal wird verstärkt und als Modulationssignal dem Trägersignal wieder aufgeprägt. Auf diese Weise entsteht eine mitgekoppelte Verstärkerschleife, die dann mit der Sing-Around-Frequenz wie ein Oszillator schwingt, wenn die allgemeine Schwingbedingung für die Sing-Around-Frequenz erfüllt ist. Die frequenzbestimmende Größe ist hierbei die Laufzeit des Ultraschallsignals durch das Fluid bei der Frequenz der Trägerschwingungen. Die Frequenz der Ultraschall-Trägerschwingungen geht nicht in den Meßeffekt ein und kann deshalb beliebig gewählt werden. Es kann deshalb eine solche Frequenz gewählt werden, bei der keine Absorptionseffekte durch das Fluid oder keine anderen äußeren Störeinflüsse möglich sind.

In einer weiteren Ausgestaltung der Erfindung kann das nach dem Empfangswandler detektierte Trägersignal zu einer Störunterdrückung in der Weise verwendet werden, daß, wenn die Ultraschall-Schwingungen im Fluid durch Dichteunterschiede, beispielsweise durch Gasblasen oder feste Partikel, absorbiert werden, ein Trägerausfall-Signal A abgeleitet wird, das zu einer Abschaltung der Meßsignal-Auswertung bzw. Alarmgabe verwendet wird. Hierzu kann beispielsweise die Meßsignal-Auswertung auf dem Wert vor dem Trägersignal-Ausfall konstant gehalten werden oder langsam mit einer einstellbaren Zeitkonstante auf einen vorbestimmten Wert, vorzugsweise Null, hingeführt werden.

Dieses erfindungsgemäße monofrequente Dauerton-Sing-Around-Frequenz-Verfahren ist prinzipiell mit allen bekannten Modulationsarten durchführbar. Es werden jedoch vorzugsweise solche Modulationsverfahren eingesetzt, die ein möglichst gutes Signal/Rausch-Verhältnis besitzen und eine gute Störunterdrückung gegenüber äußeren Störungen haben. Besonders geeignet erscheinen die Frequenz- und Phasen-Modulation sowie alle digitalen Modulationsverfahren.

Die genannte Aufgabe wird mit Hilfe einer Vorrichtung zum Messen von Strömungsgeschwindigkeiten unter Verwendung von Ultraschall-Schwingungen gelöst, bei der eine erste und eine zweite aus je einem Sende- und je einem Empfangswandler bestehende Ultraschall-Meßstrecke angeordnet sind, und bei der sich jeweils eine zur Strömungsrichtung parallel orientierte Ausbreitungskomponente der Ultraschall-Schwingungen in Strömungsrichtung, d.h. in Vorwärtsrichtung, bzw. gegen die Strömungsrichtung, d.h. in Rückwärtsrichtung, einstellt. Sie zeichnet sich dadurch aus, daß bei jeder Ultraschall-Meßstrecke der Sendewandler mit Hochfrequenz-Schwingungen eines Trägergenerators über einen Modulator zur Abgabe von Ultraschall-Schwingungen angeregt wird, daß die von jedem Empfangswandler empfangenen Ultraschall-Schwingungen mit einem Demodulator detektiert und daß diese demodulierten niederfrequenten Schwingungen über einen Verstärker auf den Modulationseingang des Modulators gekoppelt werden, so daß die beiden Ultraschall-Meßstrecken das jeweilige frequenzbestimmende Element der so aufgebauten Oszillatoren sind und daß so die niederfrequenten Resonanzschwingungen des jeweiligen Oszillators die Sing-Around-Frequenz der jeweiligen Ultraschall-Meßstrecke bilden. In einer bevorzugten Ausgestaltung der Erfindung kann der Verstärker durch eine Phasenregelschleife mit einem spannungsgesteuerten Oszillator ersetzt werden.

Mit einer Differenzstufe wird die Differenzfrequenz der beiden Sing-Around-Frequenzen in Vorwärts- und in Rückwärtsrichtung gebildet. Diese Differenzfrequenz ist in bekannter Weise direkt proportional zur Strömungsgeschwindigkeit des Fluids und unabhängig von der Schallgeschwindigkeit im Fluid, wobei der Proportionalitätsfaktor nur noch von den Abmessungen der Ultraschall-Meßstrecke abhängig ist. Diese Differenzfrequenz kann in bekannter Weise beispielsweise in ein analoges oder digitales Signal umgesetzt werden, wobei noch die Möglichkeit einer Korrektur gegeben ist, da beispielsweise der Volumenstrom durch eine Rohrleitung bekanntlich vom Strömungsprofil, d.h. von der mittleren Strömungsgeschwindigkeit und den Eigenschaften des Fluids und den Dimensionen der Rohrleitung, abhängig ist.

Die Summenfrequenz, die mit einer Summationsstufe aus den beiden Sing-Around-Frequenzen gebildet wird, ist in bekannter Weise direkt proportional der Schallgeschwindigkeit im Fluid; der Proportionalitätsfaktor ist ebenfalls nur noch von den Abmessungen der Ultraschall-Meßstrecke abhängig. Es ist bekannt, daß die Schallgeschwindigkeit im Fluid von der Temperatur und den Stoffeigenschaften des Fluids abhängig ist, d.h.

auch die Summenfrequenz ändert sich mit der Temperatur und den Stoffeigenschaften des Fluids. Es ist nun möglich, mit der Summenfrequenz Meßfehler höherer Ordnung, die infolge nichtidealer Meßbedingungen auftreten können, durch eine empirisch zu ermittelnde Korrekturkurve zu kompensieren. Hilfsweise kann zum Beispiel auch eine Temperaturmessung zu einer Meßwertkorrektur dienen.

In einer weiteren Ausgestaltung der Erfindung kann der Generator für die Trägerschwingungen für beide Ultraschall-Meßstrecken gemeinsam sein. Bei einer akustischen Kopplung der beiden Ultraschall-Meßstrecken sollten jedoch die Frequenzen der beiden Trägergeneratoren so gewählt werden, daß eine akustische Kopplung nicht zu Störungen der Messung führen kann.

Weiterhin kann aus den beiden Trägerausfall-Signalen der beiden Ultraschall-Meßstrecken mit einer logischen Auswerteschaltung ein gemeinsames Trägerausfall-Signal gebildet werden, das in der oben erläuterten Weise zu einer verbesserten Meßsignal-Auswertung verwendet werden kann.

Die Erfindung bietet den Vorteil, daß ein relativ geringer Aufwand zur Realisierung einer solchen Vorrichtung erforderlich ist und daß auf handelsübliche Bauelemente zurückgegriffen werden kann. Weiterhin bietet dieses monofrequente Dauerton-Verfahren nach dem bekannten Sing-Around-Verfahren den Vorteil, daß die Schallgeschwindigkeit im Fluid als Bestimmungskriterium für die zu messende Strömungsgeschwindigkeit entfällt. Daraus ergeben sich wiederum verschiedene technische Vorteile, wie beispielsweise die Unabhängigkeit des mit der erfindungsgemäßen Vorrichtung durchführbaren Meßverfahrens von den physikalischen Eigenschaften des Fluids.

Die vorliegende Erfindung wird im folgenden an Hand von Ausführungsbeispielen näher erläutert.

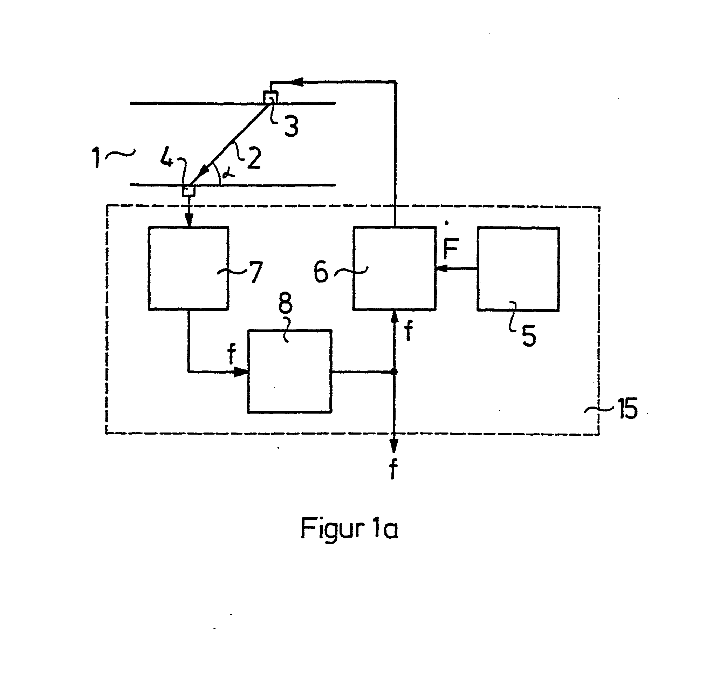

Figur 1a    zeigt den prinzipiellen Aufbau einer Sing-Around-Oszillator-Schleife mit einer akustischen Mitkopplungsstrecke.

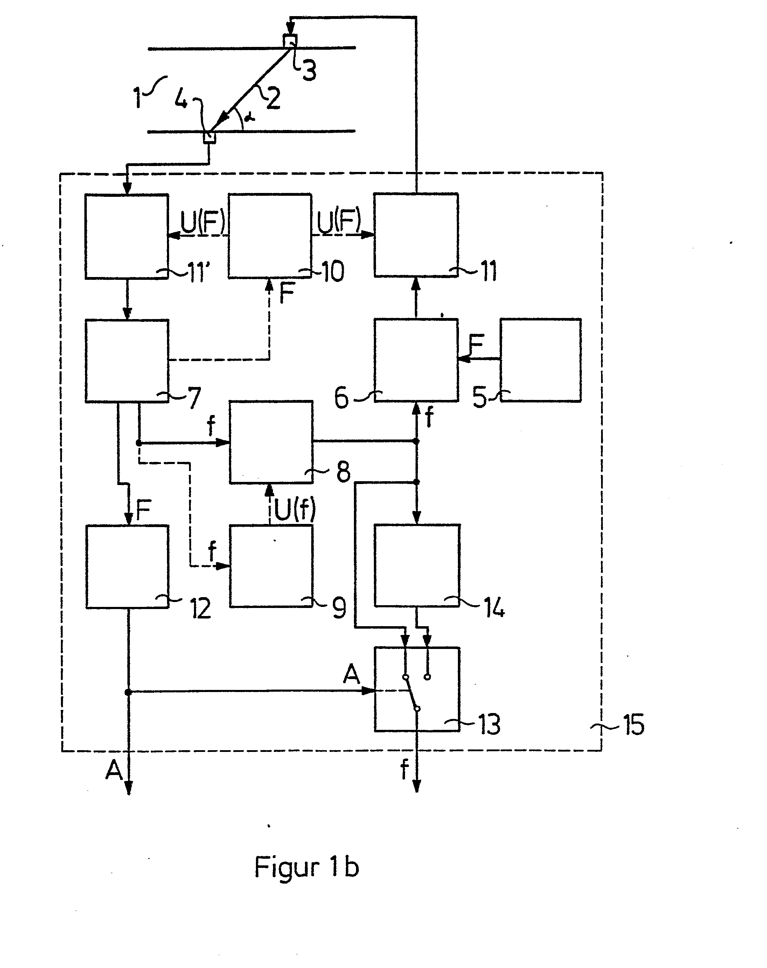

Figur 1b   zeigt einen erweiterten Aufbau der Oszillatorschleife nach
           Figur 1a.

Figur 2    zeigt den prinzipiellen Aufbau eines Ausführungsbeispiels mit
           zwei sich kreuzenden Ultraschall-Meßstrecken.

Figur 3    zeigt den prinzipiellen Aufbau eines Ausführungsbeispiels
           mit einer Ultraschall-Meßstrecke.


Die Figur 1a  zeigt den prinzipiellen Aufbau eines Ausführungsbeispiels eines Sing-Around-Oszillators mit einem Strömungskanal 1, in
dem schräg zur Strömungsrichtung des Fluids eine Ultraschall-Meßstrekke 2 unter einem Anstellwinkel $\alpha$ angeordnet ist. Der Anstellwinkel $\alpha$ liegt zwischen 0 Grad und 90 Grad, vorzugsweise bei 45 Grad.
Die Ultraschall-Meßstrecke 2 besteht aus einem Sendewandler 3, der
Ultraschall-Schwingungen der Trägerfrequenz F über die Länge L der
Meßstrecke zu einem Empfangswandler 4 sendet. Durch den Strömungskanal 1 fließt ein Fluid mit der mittleren Strömungsgeschwindigkeit v.
Über die Ultraschall-Meßstrecke werden dauernd Ultraschall-Schwingungen übertragen, indem der Sendewandler 3 dauernd von einem Hochfrequenz-Generator 5 zu Ultraschall-Schwingungen angeregt wird. Zwischen
dem Generator 5 und dem Sendewandler 3 befindet sich ein Modulator 6,
der die Hochfrequenz-Trägerschwingungen F des Generators 5 mit der
Sing-Around-Frequenz f moduliert. Vom Empfangswandler 4 werden die
modulierten Ultraschall-Schwingungen wieder in elektrische Schwingungen derselben Frequenz umgesetzt und einem Demodulator 7 zugeführt,
der die aufmodulierte niederfrequente Sing-Around-Frequenz f von den
hochfrequenten Trägerschwingungen F trennt. Die niederfrequenten Sing-
Around-Schwingungen der Frequenz f werden mit dem Verstärker 8 um den
Verstärkungsfaktor V verstärkt und dem Modulationseingang des Modulators 6 zugeführt. Der Verstärker 8 und das Mitkopplungsnetzwerk, bestehend aus Modulator 6, Sendewandler 3, Ultraschall-Meßstrecke 2,
Empfangswandler 4 und Demodulator 7, bilden zusammen eine Sing-Around-
Oszillator-Schleife, die dann auf der Sing-Around-Frequenz f schwingt,
wenn die allgemeine Schwingbedingung für diese Frequenz f erfüllt ist.
Die Sing-Around-Frequenz steht dann am Ausgang des Verstärkers 8 zur

weiteren Verarbeitung und Auswertung an.

In einer weiteren Ausgestaltung der Erfindung kann der Verstärker 8 durch eine in Figur 1a nicht gezeigte Phasenregelschleife (PLL - phase locked loop) mit einem spannungsgesteuerten Oszillator (VCO - voltage controlled oscillator) und einem Phasendetektor ersetzt werden. Jeweils für eine Ultraschall-Meßstrecke sorgt eine Phasenregelschleife mit einem jeweils dazugehörigen spannungsgesteuerten Oszillator dafür, daß sich jeweils am Sing-Around-Frequenz-Ausgang des Demodulators eine konstante Phasenlage bezogen auf das Sing-Around-Frequenz-Signal des Modulators einstellt. Zu diesem Zweck wird jeweils ein durch Phasenvergleich zu gewinnendes Regelsignal an den erwähnten spannungsgesteuerten Oszillator gegeben, womit dieser eine der gewünschten Phasenlage angepaßte Frequenz erzeugt. Dieser spannungsgesteuerte Oszillator erzeugt genau die Sing-Around-Frequenz, die durch die Laufzeit der Ultraschall-Schwingungen durch die Ultraschall-Meßstrecke bestimmt wird. Auf diese Weise wird das Sing-Around-Frequenz-Signal des spannungsgesteuerten Oszillators direkt auf den Modulator 6 gegeben.

In einer weiteren in Fig. 1b gezeigten Ausgestaltung der Erfindung kann mit einer Regelung oder Steuerung des Modulationsgrades des Modulators 6 bzw. mit einer Regelung oder Steuerung des Verstärkungsfaktors V des Verstärkers 8 die Schwingbedingung für den Sing-Around-Oszillator 15 konstant gehalten werden. Diese Regelung oder Steuerung erfolgt mit einer Steuerspannung U (f), die aus der Stärke des Sing-Around-Signals am Ausgang des Demodulators 7 mit einem Regel- oder Steuerverstärker 9 gewonnen wird und dem Modulator 6 bzw. dem Verstärker 8 zugeführt wird.

Um Schwankungen bei der Übertragung der Ultraschall-Schwingungen über die Ultraschall-Meßstrecke auszugleichen, kann das Empfangssignal am Empfangswandler 4 konstant gehalten werden, indem die Stärke des Trägersignals aus dem Demodulator 7 oder direkt nach dem Empfangswandler 4 über einen Regel- oder Steuerverstärker 10 als Regel- oder Steuersignal U (F) für einen zusätzlichen Hochfrequenzverstärker 11 vor dem Sendewandler 3 dient, wobei die Verstärkung des Hochfrequenzverstärkers 11 mit dem Regel- oder Steuersignal U (F) einstellbar ist. Alternativ oder zusätzlich kann die Verstärkung eines zusätzlichen Hochfrequenzverstärkers 11' nach dem Empfangswandler 4 mit dem Regel- oder Steuersignal U (F) nachgeführt werden.

In einer weiteren Ausgestaltung der Erfindung kann das Trägersignal nach dem Empfangswandler 4 bzw. Demodulator 7 bei einer vollständigen Unterbrechung der Ultraschall-Meßstrecke mit einem Auswerteglied 12 zu einem Trägerausfall- bzw. Alarmsignal A verwendet werden, das nur dann ansteht, wenn das Trägersignal ausgefallen ist. Hiermit kann der Ausgang des Sing-Around-Oszillators 15 abgeschaltet werden oder, wie in Figur 1b mit dem Umschalter 13 angedeutet, auf den Ausgang eines Haltegliedes 14 geschaltet werden, das den zuletzt gemessenen Wert der Sing-Around-Frequenz f weiterhin ausgibt oder mit einer vorgegebenen Zeitfunktion einem vorher eingestellten Endwert, vorzugsweise Null, zustrebt. Das Halteglied 14 kann beispielsweise ein als Schwungrad wirkender, träger Nachlaufoszillator oder ein elektronischer Speicher sein.

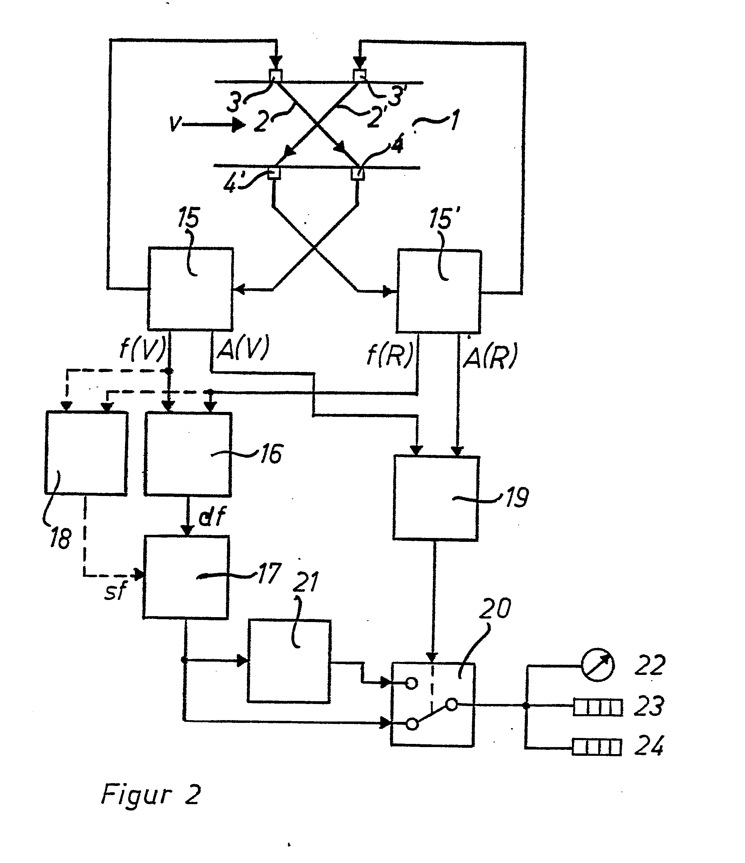

Die Figur 2 zeigt den prinzipiellen Aufbau eines Ausführungsbeispiels für die Erfindung mit einem Strömungskanal 1, in dem in der gezeigten Weise eine erste Ultraschall-Meßstrecke 2 und eine zweite Ultraschall-Meßstrecke 2' einander kreuzend unter einem Anstellwinkel $\alpha$ angeordnet sind. Die erste Ultraschall-Meßstrecke 2 besteht aus einem ersten Sendewandler 3, der Ultraschall-Schwingungen in Vorwärtsrichtung zur Strömungsrichtung des Fluids über die Länge L der Meßstrecke 2 zu einem Empfangswandler 4 sendet. Ein zweiter Sendewandler 3' sendet Ultraschall-Schwingungen in Rückwärtsrichtung zur Strömungsrichtung des Fluids über die Länge L der Meßstrecke 2' zu einem zweiten Empfangswandler 4'. Durch den Strömungskanal 1 fließt ein Fluid mit einer mittleren Strömungsgeschwindigkeit v. Über die beiden Ultraschall-Meßstrecken werden dauernd Ultraschall-Schwingungen übertragen.

Ein jeweils für eine Ultraschall-Meßstrecke vorgesehener Sing-Around-Oszillator 15 bzw. 15', entsprechend Figur 1 aufgebaut, erfaßt die entsprechende Sing-Around-Frequenz, d.h. mit der Sing-Around-Schleife 3, 2, 4 und 15 die Sing-Around-Frequenz f (V) in Vorwärtsrichtung und mit der Sing-Around-Schleife 3', 2', 4' und 15' die Sing-Around-Frequenz f (R) in Rückwärtsrichtung.

Die nachfolgende Auswertung der beiden Sing-Around-Frequenzen f (V) und f (R) kann mit analogen oder digitalen elektronischen Mitteln erfolgen, beispielsweise auch mit einem Mikroprozessor. Im folgenden wird nur der prinzipielle Signalverlauf wiedergegeben; eine eventuell notwendige Umformung von einer Signalform in eine andere wurde nicht angegeben, da dies für ein prinzipielles Verständnis nicht erforderlich ist.

Mit einer Differenzstufe 16 wird die Differenzfrequenz df als Differenz zwischen f (V) und f (R) oder ein zur Differenzfrequenz proportionales analoges oder digitales elektrisches Signal gebildet. Bei analoger Signalverarbeitung besteht die Differenzstufe 16 beispielsweise aus einer Mischstufe mit nachfolgendem Tiefpaßfilter oder aus einem Operationsverstärker.

Mit einer Korrekturstufe 17 können evtl. vorhandene nichtlineare Zusammenhänge zwischen der Differenzfrequenz df und der mittleren Strömungsgeschwindigkeit v bzw. hiervon abgeleitete Größen wie Volumen- oder Massendurchfluß linearisiert werden. Hierzu kann beispielsweise über eine Summationsstufe 18 die Summenfrequenz sf als Summe der beiden Sing-Around-Frequenzen f (V) und f (R) oder alternativ eine Temperaturmessung als zusätzliche Korrekturgröße dienen.

Jede der beiden Sing-Around-Schleifen liefert ein Alarmsignal A (V) und A (R) bei einem Ausfall der Ultraschall-Schwingungen am Empfangswandler. Die beiden Alarmsignale A (V) und A ( R) können nun - ähnlich dem Umschalter 13 in Figur 1b - über ein Auswerteglied 19 die Differenzfrequenz df mit dem Umschalter 20 von der direkten Signalausgabe auf ein Halteglied 21 umschalten. Das Auswerteglied 19 kann beispielsweise im einfachsten Fall ein ODER-Gatter sein. Das Halteglied 21 kann beispielsweise ein analoger Schwungrad-Oszillator oder ein digitaler Speicher sein, wobei der Wert zeitlich konstant bleiben oder mit einer einstellbaren Zeitkonstante auf einen vorher eingestellten Wert geführt werden kann.

Wenn Störungen der Differenzfrequenz df mit den elektronischen Baugruppen 19, 20 und 21 in geeigneter Weise unterdrückt werden können, können die Baugruppen 13 und 14 nach Figur 1b in den beiden Sing-Around-Schleifen 15 bzw. 15' entfallen. Das so korrigierte bzw. verarbeitete Signal der Differenzfrequenz df kann nun über nicht in Figur 2 eingezeichnete Meßumformer oder Meßumsetzer als analoges Signal 22 oder digitales Signal 23 ausgegeben oder angezeigt werden, sowie zu einer Volumen- oder Mengenzählung 24 umgeformt werden.

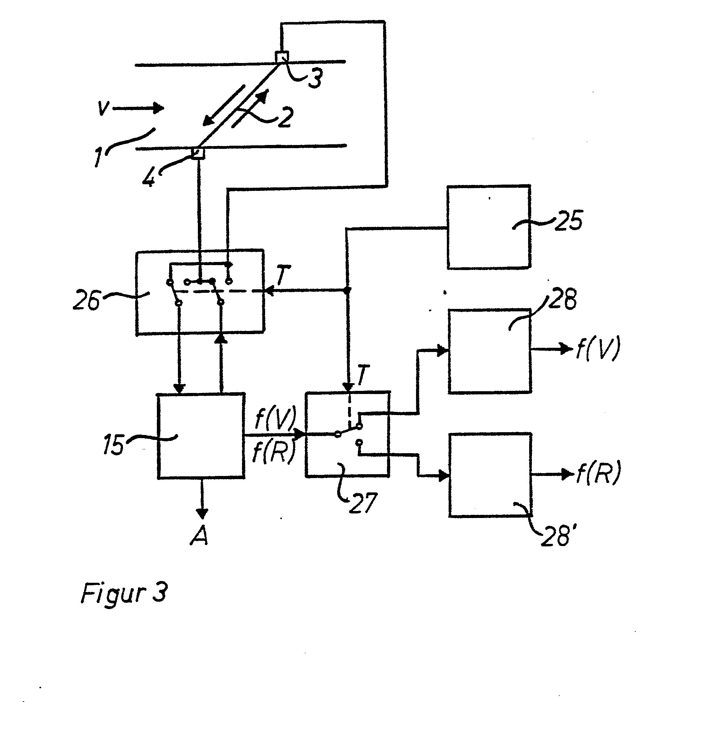

Eine vorteilhafte Weiterbildung der Erfindung nach Figur 3 sieht vor, daß eine einzige Ultraschall-Meßstrecke 2 in einem Strömungskanal 1 vorgesehen ist, bei der die Wandler 3 und 4 alternierend jeweils als Sendewandler bzw. Empfangswandler betrieben werden, so daß alternierend eine Ausbreitungskomponente der Ultraschall-Schwingungen in Strömungsrichtung, d.h. in Vorwärtsrichtung, bzw. gegen die Strömungsrichtung, d.h. in Rückwärtsrichtung, einstellbar ist. Die Ultraschall-Meßstrecke 2 und die beiden Ultraschall-Wandler 3 und 4 bilden zusammen mit dem Sing-Around-Oszillator 15 - entsprechend Figur 1 - die Sing-Around-Schleife. Ein Taktgenerator 25 steuert einen Doppelumschalter 26, mit dem die beiden Ultraschall-Wandler 3 und 4 alternierend in Vorwärts- und in Rückwärtsrichtung betrieben werden.Entsprechend der Stellung von Schalter 26 wird in der Sing-Around-Schleife die jeweilige Sing-Around-Frequenz gebildet, entweder f (V) oder f (R). Mit einem weiteren Schalter 27, der synchron zum Schalter 26 vom Taktgenerator 25 gesteuert wird, wird ein der jeweiligen Sing-Around-Frequenz entsprechendes Signal bis zur Ableitung der mittleren Strömungsgeschwindigkeit in einem Halteglied 28 und 28' gespeichert. Die weiteren Auswerte-Baugruppen sind in Figur 3 nicht dargestellt;sie entsprechen denen in Figur 2.

PATENTANPRÜCHE

1.    Verfahren zum Messen der Strömungsgeschwindigkeit von Fluiden mittels Ultraschall, bei dem eine erste Ultraschall-Meßstrecke in Vorwärtsrichtung und eine zweite Ultraschall-Meßstrecke in Rückwärtsrichtung von Ultraschall-Schwingungen durchstrahlt werden, bei dem die jeweiligen Laufzeiten der Ultraschall-Schwingungen über die jeweilige Ultraschall-Meßstrecke durch Erzeugen von Sing-Around-Frequenzen gemessen und bei dem aus der Differenz der beiden Sing-Around-Frequenzen die mittlere  Strömungsgeschwindigkeit des Fluids bestimmt wird, d a d u r c h   g e k e n n z e i c h n e t,  daß die Ultraschall-Schwingungen als Dauersignal übertragen werden, daß die Ultraschall-Schwingungen als Trägerfrequenz-Signal für die Sing-Around-Frequenzen dienen, daß die Sing-Around-Frequenz-Signale vor dem Senden über die jeweilige Ultraschall-Meßstrecke auf das jeweilige Trägerfrequenz-Signal moduliert werden, daß die jeweilige Sing-Around-Frequenz nach dem Empfangen vom jeweiligen Trägerfrequenz-Signal demoduliert wird, und daß das jeweilige demodulierte Sing-Around-Frequenz-Signal als verstärktes Signal wieder auf das jeweilige Trägerfrequenz-Signal moduliert wird.

2.    Verfahren nach Anspruch 1, d a d u r c h   g e k e n n z e i c h n e t, daß eine einzige Ultraschall-Meßstrecke vorgesehen ist, die alternierend in Vorwärts- und in Rückwärtsrichtung von Ultraschall-Schwingungen durchlaufen wird.

3.    Verfahren nach Anspruch 1 oder 2, d a d u r c h   g e k e n n z e i c h n e t, daß das Träger-Frequenz-Signal mit der Sing-Around-Frequenz frequenzmoduliert wird.

4.    Verfahren nach Anspruch 1 oder 2, d a d u r c h   g e k e n n z e i c h n e t, daß das Trägerfrequenz-Signal mit der Sing-Around-Frequenz phasenmoduliert wird.

5.   Vorrichtung zum Messen von Strömungsgeschwindigkeiten mit Hilfe von Ultraschall-Schwingungen nach Anspruch 1, bei der eine erste und eine zweite aus je einem Sendewandler (3 bzw. 3') und je einem Empfangswandler (4 bzw. 4') bestehende Ultraschall-Meßstrecke (2 bzw. 2') angeordnet sind, bei der sich jeweils eine zur Strömungsrichtung parallel orientierte Ausbreitungskomponente der Ultraschall-Schwingungen in Strömungsrichtung, d.h. in Vorwärtsrichtung V, bzw. gegen die Strömungsrichtung, d.h. in Rückwärtsrichtung R, einstellt, bei der die Laufzeiten der Ultraschall-Schwingungen vom Sendewandler (3 bzw. 3') zum Empfangswandler (4 bzw. 4') durch Erzeugen von Sing-Around-Frequenzen in Vorwärtsrichtung f (V) bzw. in Rückwärtsrichtung f (R) gemessen werden und bei der aus der Differenz der beiden Sing-Around-Frequenzen die mittlere Strömungsgeschwindigkeit des Fluids im Strömungskanal (1) bestimmt wird, d a d u r c h   g e k e n n z e i c h n e t, daß die Ultraschall-Schwin- gungen aus einem Trägerfrequenz-Generator (5) als Dauersignal übertragen werden, daß das jeweilige Trägersignal durch einen Modulator (6) mit der jeweiligen Sing-Around-Frequenz moduliert wird, daß das jeweilige, über die Ultraschall-Meßstrecke (2 bzw. 2') übertragene und modulierte Trägersignal durch einen Demodulator (7) demoduliert wird und daß das jeweilige demodulierte Sing-Around-Frequenz-Signal über einen zugehörigen Verstärker (8) auf den Modulatoreingang des zugehörigen Modulators (6) zurückgeführt wird, so daß je ein Sing-Around-Oszillator (15 bzw. 15') entsteht, der mit der jeweiligen Sing-Around-Frequenz schwingt.

6.   Vorrichtung zur Durchführung des Verfahrens nach Anspruch 2 oder nach Anspruch 5, d a d u r c h   g e k e n n z e i c h n e t, daß eine einzige Ultraschall-Meßstrecke (2) vorgesehen ist, bei der die Wandler alternierend jeweils als Sendewandler bzw. Empfangswandler betrieben werden, so daß alternierend eine Ausbreitungskomponente der Ultraschall- Schwingungen in Strömungsrichtung, d.h. in Vorwärtsrichtung, bzw. gegen die Strömungsrichtung, d.h. in Rückwärtsrichtung, einstellbar ist, daß der Sing-Around-Oszillator (15) jeweils alternierend mit den entsprechenden Sing-Around-Frequenzen schwingt und daß jeweils ein der Vorwärtsrichtung und der Rückwärtsrichtung entsprechendes Sing-Around-Signal bis zur Ableitung der mittleren Strömungsgeschwindigkeit gespeichert wird.

7.    Vorrichtung nach Anspruch 5 oder 6, d a d u r c h g e k e n n z e i c h n e t, daß die jeweilige Sing-Around-Frequenz jeweils mittels einer an sich bekannten, einen spannungsgesteuerten Oszillator (VCO - voltage controlled oscillator) enthaltenden Phasenregelscheife (PLL - phase-locked loop) derart geregelt wird, daß sich unter allen Bedingungen eine konstante Phasenlage des vom Demodulator (7) demodulierten Sing-Around-Frequenz-Empfangssignals bezogen auf das vom spannungsgesteuerten Oszillator zum Modulator (6) ausgegebene Sing-Around-Frequenz-Sendesignal einstellt.

8.    Vorrichtung nach Anspruch 5 oder 6 oder 7, d a d u r c h g e k e n n z e i c h n e t, daß die Differenz aus der Sing-Around-Frequenz in Vorwärtsrichtung und der in Rückwärtsrichtung mit digitalen Zählern gebildet wird.

9.    Vorrichtung nach Anspruch 8, d a d u r c h g e k e n n z e i c h n e t, daß die Differenz aus der Sing-Around-Frequenz in Vorwärtsrichtung und der in Rückwärtsrichtung mit einem Vorwärts-Rückwärts-Zähler gebildet wird.

10.    Vorrichtung nach Anspruch 5 oder 6 oder 7, d a d u r c h g e k e n n z e i c h n e t, daß aus der Stärke des empfangenen und demodulierten Sing-Around-Frequenz-Signals eine Steuer- oder Regelgröße erzeugt wird, mit der die Verstärkung des Sing-Around-Verstärkers (8) bzw. der Modulationsgrad des Modulators (6) eingestellt wird.

11.    Vorrichtung nach Anspruch 5 oder 6 oder 7, d a d u r c h g e k e n n z e i c h n e t, daß bei einem Sing-Around-Oszillator (15) aus der Stärke des empfangenen Trägerfrequenz-Signals eine Steuer-oder

- 4 -

Regelgröße erzeugt wird, mit der die Verstärkung des Sendeverstärkers (11) bzw. des Empfangsverstärkers (11') eingestellt wird.

12. Vorrichtung nach Anspruch 5 oder 6 oder 7, d a d u r c h g e k e n n z e i c h n e t, daß bei einem Sing-Around-Oszillator (15) aus dem empfangenen Trägerfrequenz-Signal ein Trägerausfall-Signal bzw. Alarmsignal gebildet wird, mit dem bei Ausfall der empfangenen Ultraschall-Schwingungen die Auswertung des Sing-Around-Frequenz-Signals abgeschaltet wird oder die Auswertung auf ein Halteglied (14) geschaltet wird, das den letzten, vor dem Ausfall vorhandenen Wert der Sing-Around-Frequenz weiter ausgibt oder mit einer vorbestimmten Zeitfunktion auf einen vorher eingestellten Endwert, vorzugsweise Null, einstellt.

13. Vorrichtung nach Anspruch 5 oder 6 oder 7, d a d u r c h g e k e n n z e i c h n e t, daß aus den beiden empfangenen Trägerfrequenz-Signalen der beiden Sing-Around-Oszillatoren (15 bzw. 15') mit einer Auswerteschaltung (19) ein gemeinsames Trägerausfall-Signal bzw. Alarmsignal gebildet wird, mit dem bei Ausfall einer der beiden empfangenen Ultraschall-Schwingungen die Auswertung der Differenzfrequenz der beiden Sing-Around-Frequenzen unterbrochen wird oder die Auswertung auf ein Halteglied (21) geschaltet wird, das den letzten, vor dem Ausfall anliegenden Wert der Differenzfrequenz weiter ausgibt oder mit einer vorbestimmten Zeitfunktion auf einen vorher eingestellten Endwert, vorzugsweise Null, einstellt.

14. Vorrichtung nach Anspruch 12 oder 13, d a d u r c h g e k e n n z e i c h n e t, daß das Halteglied (14) oder (21) ein Nachlaufoszillator oder ein elektronischer Speicher ist.

15. Vorrichtung nach Anspruch 13, d a d u r c h g e k e n n z e i c h n e t, daß die Auswerteschaltung (19) ein ODER-Gatter ist.

16. Vorrichtung nach Anspruch 5 oder 6 oder 7, d a d u r c h g e k e n n z e i c h n e t, daß die Summe der Sing-Around-Frequenz in Vorwärtsrichtung und der in Rückwärtsrichtung in einer Summationsstufe (18) gebildet wird und als Steuersignal für eine Korrekturstufe (17) dient, um einen nichtlinearen Zusammenhang zwischen Differenzfrequenz und mittlerer Strömungsgeschwindigkeit zu linearisieren.

17. Vorrichtung nach Anspruch 5 oder 6 oder 7, d a d u r c h g e k e n n z e i c h n e t, daß mit einer Temperaturmessung ein Steuersignal für eine Korrekturstufe (17) gebildet wird, um den Einfluß einer Temperaturänderung des Fluids auf die Differenzfrequenz zu korrigieren und zu linearisieren.

18. Vorrichtung nach Anspruch 7, d a d u r c h g e k e n n - z e i c h n e t, daß bei linearem Zusammenhang zwischen der jeweiligen Steuergröße für den spannungsgesteuerten Oszillator (VCO) und der jeweils zugehörigen Sing-Around-Frequenz die Differenz beider Steuergrößen als meßwertproportionale Größe verwendet wird.

19. Vorrichtung nach Anspruch 18, d a d u r c h g e k e n n - z e i c h n e t, daß die Differenz beider Steuergrößen durch Subtraktion ihrer Analogwerte gebildet wird.

20. Vorrichtung nach Anspruch 19, d a d u r c h g e k e n n - z e i c h n e t, daß die Differenzbildung mit Hilfe eines Operationsverstärkers vorgenommen wird.

21. Vorrichtung nach Anspruch 18, d a d u r c h g e k e n n - z e i c h n e t, daß die Differenz beider Steuergrößen durch Subtraktion ihrer digitalisierten Werte mit an sich bekannten Mitteln gebildet wird.

1/4

Figur 1a

Figur 1b

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 026 165 (R.J. REDDING) <br> * Seite 1, Zeilen 39-86; Figur 1 * | 1-7 | G 01 P 5/00 |
| A | | 10,11 | |
| A | DE-A-2 828 937 (SIEMENS) <br><br> * Seite 4, Zeile 12 - Seite 5, Zeile 20; Ansprüche 2-8; Figur * | 2,6,8, 9,18- 21 | |
| A | DE-A-2 532 889 (U.K.A.E.A.) <br><br> * Seite 11, Zeile 30 - Seite 12, Zeile 29; Figur 1 * | 1,7,10 ,12,13 | |
| A | DE-B-1 026 998 (JACK KRITZ) <br><br> * Spalte 6, Zeilen 46-62; Figur 4 * | 1,10, 11 | |
| A | GB-A-1 507 637 (PANAMETRICS) <br><br> * Seite 1, Zeilen 33-47; Seite 3, Zeile 62 - Seite 4, Zeile 4; Figur 1 * | 2,6,8, 16 | |

**RECHERCHIERTE SACHGEBIETE (Int. Cl.4)**

G 01 P
G 01 F

Der vorliegende Recherchenbericht wurde für alle Patentansprüche erstellt.

| Recherchenort <br> DEN HAAG | Abschlußdatum der Recherche <br> 19-07-1985 | Prüfer <br> HANSEN P. |
|---|---|---|